(19) **Europäisches Patentamt**

**European Patent Office**

**Office européen des brevets**

(11) **EP 0 782 327 B1**

(12) **FASCICULE DE BREVET EUROPEEN**

(45) Date de publication et mention
de la délivrance du brevet:
**21.11.2001 Bulletin 2001/47**

(51) Int Cl.⁷: **H04N 1/40**

(21) Numéro de dépôt: **96402648.8**

(22) Date de dépôt: **06.12.1996**

(54) **Procédé de modification de la résolution d'une image numérisée**

Verfahren zur Änderung der Auflösung eines digitalen Bildes

Method of modifying the resolution of a digital image

(84) Etats contractants désignés:
**AT BE CH DE DK ES FI FR GB GR IE IT LI LU MC NL PT SE**

(30) Priorité: **28.12.1995 FR 9515668**

(43) Date de publication de la demande:
**02.07.1997 Bulletin 1997/27**

(73) Titulaire: **SAGEM SA**
**75783 Paris Cédex 16 (FR)**

(72) Inventeur: **Frederic, Alain**
**95610 Eragny (FR)**

(74) Mandataire: **Bloch, Gérard**
**2, square de l'Avenue du Bois**
**75116 Paris (FR)**

(56) Documents cités:
**US-A- 5 023 919        US-A- 5 231 519**
**US-A- 5 392 137**

- **PATENT ABSTRACTS OF JAPAN vol. 14, no. 464 (M-1033), 9 Octobre 1990 & JP 02 185456 A (CANON INC), 19 Juillet 1990,**

## Description

L'invention concerne un procédé de modification de la résolution d'une image numérisée.

La numérisation des images permet de transmettre et mémoriser celles-ci sans risque de dégradation. Elle trouve notamment application dans les télécopieurs.

L'image d'un document à transmettre est numérisée point par point (ou élément par élément) par une tête de lecture d'un scanner avec laquelle, à chaque position de point, ou pixel, on attribue une valeur numérique représentant. l'intensité de la nuance de gris lue sur le document. Pour une restitution en noir et blanc, la valeur de nuance est comparée à un seuil de gris moyen pour fournir un bit 0 ou 1 représentant le blanc ou le noir.

Dans le télécopieur récepteur, une imprimante restitue les pixels, noirs ou blancs, avec des nombres de points au millimètre, horizontalement et verticalement, identiques à ceux de la tête d'analyse, par exemple 8 points/mm horizontalement et 7,7 points/mm verticalement.

Ces nombres de points déterminent la résolution de l'image numérisée restituée et sont un compromis entre l'obtention d'une image de bonne qualité, à haute résolution, et la transmission d'un nombre limité de bits.

Or, depuis quelque temps sont apparues des imprimantes de résolution améliorée, comme les imprimantes laser. La demanderesse a alors cherché à les utiliser pour améliorer la résolution de l'image restituée.

Jusqu'alors, lorsqu'on utilisait ces imprimantes laser pour imprimer une télécopie, on dégradait en fait sa résolution pour la ramener à celle d'un télécopieur. Plus précisément, comme on ne peut commander l'imprimante que selon sa propre résolution, par exemple 12 points/mm, on transformait un nombre donné de pixels consécutifs de l'image reçue (8 points/mm en horizontal) en un nombre supérieur de pixels représentant au total la même longueur d'image (par exemple de 2 à 3). Cela créait en fait une distorsion puisque, en poursuivant avec l'exemple ci-dessus, en cas de présence de deux pixels d'origine de valeurs différentes, blanc et noir, on effectuait une sorte de lissage sommaire en restituant, entre ces deux pixels différents, le troisième pixel sous forme d'un blanc ou d'un noir, alors qu'on aurait dû en fait restituer une moyenne, ou gris, des deux autres. En d'autres termes, le "grain" de l'image était localement accru ou réduit et cette distorsion dégradait l'image. En outre, pour des raisons pratiques de volume de matériel et de calcul, on ne peut appliquer le procédé ci-dessus que pour des rapports simples de changement de résolution.

La demanderesse a alors cherché à exploiter pleinement la résolution de l'imprimante par un changement de la résolution de l'image reçue qui s'affranchisse du rapport des résolutions initiale et finale, horizontalement et verticalement, tout en restreignant la distorsion introduite par cette opération.

Par JP-A 2185456 on connaît un procédé de modification de la résolution d'une image obtenue par numérisation d'une image réelle, l'image numérisée étant constituée d'une pluralité de pixels d'intensité déterminée, dans lequel on recherche et isole des contours dans l'image numérisée.

Toutefois, l'image obtenue par ce procédé conserve le grain lié à la résolution de l'image numérisée d'origine.

La présente invention propose de pallier cet inconvénient.

A cet effet, l'invention concerne un procédé du type défini ci-dessus, caractérisé par le fait qu'on crée des pixels supplémentaires par interpolation des intensités de pixels d'origine, tenant compte seulement des pixels situés d'un même côté d'un contour pour former une image de résolution modifiée.

Grâce à l'invention, on s'affranchit du rapport des résolutions d'image.

Cette suppression du grain ne s'effectue toutefois pas au détriment de la résolution. En effet, l'exclusion de toute interaction, ou migration, entre pixels séparés par un contour évite une perte de résolution lors de l'interpolation, du fait que seules sont prises en compte les informations pertinentes, c'est-à-dire relatives uniquement à des zones d'image relativement homogènes. Un contour séparant une zone claire d'une zone foncée conserve ainsi, à sa traversée, une transition abrupte, exempte de dégradation. L'interpolation permet en outre de choisir toute position intermédiaire voulue, entre les positions des pixels d'origine, pour échantillonner l'image interpolée selon une nouvelle résolution tout en restituant les nuances entre pixels d'origine adjacents.

L'image peut être une image noir et blanc ou en couleurs, avec ou sans niveaux intermédiaires d'intensité de pixels.

L'invention sera mieux comprise à l'aide de la description suivante du mode de mise en oeuvre préféré du procédé. de l'invention, en référence au dessin annexé, sur lequel:

- la figure 1 est un synoptique représentant une chaîne classique d'analyse de document dans un télécopieur et une chaîné de restitution d'image, mettant en oeuvre le procédé de l'invention, et

- la figure 2 illustre l'interpolation entre pixels.

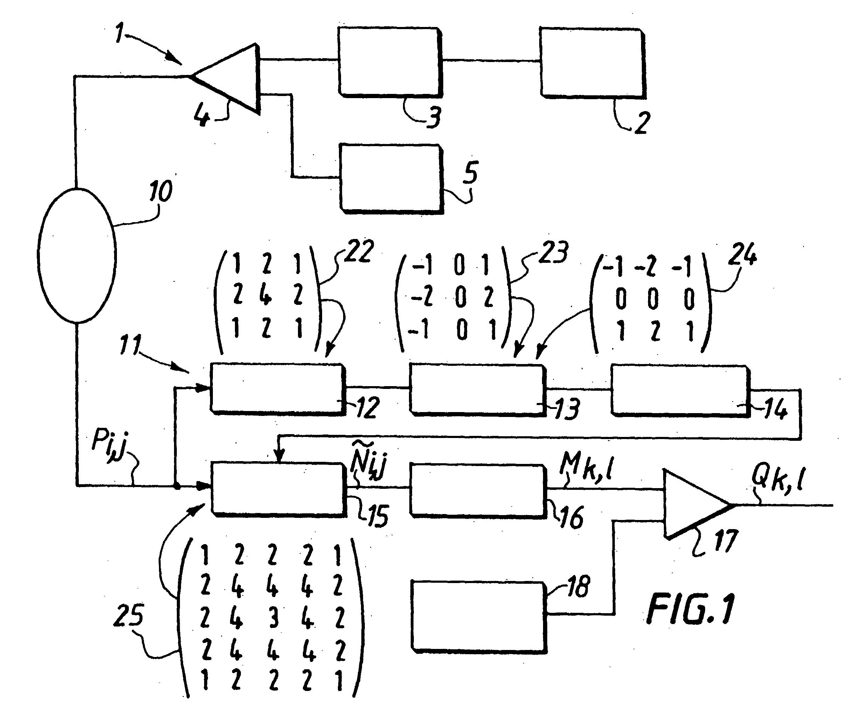

La chaîne d'analyse 1, ou scanner, de la figure 1 appartient à un télécopieur et comporte, dans l'ordre de propagation des signaux d'image, un capteur photosensible 2, ici CCD, un convertisseur analogique/numérique 3 et un comparateur 4 assurant la comparaison du niveau d'intensité échantillonné des pixels de l'image d'un document analysé par le CCD 2 avec une valeur de seuil d'intensité, représentant une intensité moyenne, mémorisée dans un registre 5. Il s'agit dans cet exemple d'une analyse en noir et blanc de l'image, si bien que les signaux d'intensité représentent des niveaux de gris. Une analyse en couleurs de l'image procéderait du même principe. Le comparateur 4 est relié en sortie au réseau téléphonique commuté RTC 10.

La chaîne de restitution d'image 11 d'un autre télécopieur comporte, de son entrée, reliée au RTC 10, à sa sortie de commande d'une imprimante laser, non représentée, un circuit 15 d'estimation de l'image d'origine, un circuit d'interpolation 16 et un comparateur 17, recevant une valeur de seuil d'intensité de gris moyen, mémorisée dans un registre 18. Le RTC 10 alimente aussi en donnée de télécopie Pij une chaîne d'extraction de contours constituée par un circuit 12 de lissage, un circuit 13 de calcul de gradient et un circuit comparateur de seuil 14 commandant le circuit 15.

Les circuits 12-16 sont spécifiquement destinés à la mise en oeuvre du procédé de l'invention, afin de commander l'imprimante laser selon une résolution de 600 points par pouce dans cet exemple, soit environ 24 points par millimètre, à partir des signaux engendrés par le CCD 2 avec une résolution de 8 points/mm en horizontal et 7,7 points/mm en vertical.

Afin de modifier la résolution de l'image d'origine obtenue par numérisation de l'image réelle, ou optique, du document, constituée d'une pluralité de pixels d'intensité déterminée,

- on recherche et isole des contours dans l'image numérisée et

- on crée des pixels supplémentaires par interpolation des intensités de pixels d'origine situés d'un même côté d'un contour pour former une image de résolution modifiée.

Pour la première phase, évoquée ci-dessus, relative aux contours, les trois circuits 12-14 servent à dresser une carte des. contours pour ensuite. commander un traitement de l'image numérisée dans les circuits 15-16. Les circuits 12-14 effectuent respectivement un lissage des intensités des pixels de l'image d'origine numérisée, un calcul du gradient d'intensité entre pixels voisins à intensités lissées et une comparaison des gradients à un seuil, pour fournir une image ou carte de contours.

En ce qui concerne la seconde phase, l'image numérisée qui est ensuite traitée peut être considérée comme ayant trois "dimensions" : horizontale, verticale et niveau d'intensité des pixels d'une matrice d'échantillonnage. Chacune de ces trois dimensions présente une quantification, liée respectivement au pas d'analyse, horizontal et vertical, et à la numérisation des intensités en valeurs discrètes, ici limitées à deux valeurs, de blanc ou noir. Il s'agit donc d'éliminer les trois quantifications ci-dessus, afin de reconstituer, sous forme électronique, l'image optique d'origine, par une transformation inverse de celle effectuée dans la chaîne 1 d'analyse. Le télécopieur récepteur peut ainsi être l'équivalent d'un photocopieur.

Les deux phases ci-dessus vont maintenant être successivement décrites en détail.

Associée au circuit 12 est représentée une matrice 22 de pondération des intensités de pixels dans une zone limitée de l'image numérisée d'origine, ici 3 x 3 pixels, tandis qu'au circuit 13 sont associées deux matrices 23, 24 de calcul de gradient respectivement dans la direction horizontale, ou ligne, et la direction verticale.

La matrice 22 est centrée, ici successivement, sur chaque pixel de l'image numérisée d'origine pour calculer une valeur composite d'intensité de gris prenant en compte l'intensité, noir ou blanc, du pixel considéré et celles des pixels qui l'entourent, avec une loi de pondération fonction inverse de la distance entre le pixel central et chacun des autres pixels. Par fonction inverse, on entend une fonction dont le sens de variation est différent de celui de la variable, quelle que soit la sensibilité de la fonction aux variations de la variable. La moyenne pondérée ainsi obtenue représente, pour le pixel considéré, un niveau ou densité par unité de surface de gris moyen de la zone considérée de l'image optique d'origine, sans toutefois effacer le "relief" de gris puisque les pixels les. plus éloignés n'ont qu'une influence réduite. On obtient ainsi une estimée de l'image optique d'origine, de laquelle a pratiquement disparu, par le lissage, la quantification d'intensité due au codage noir/blanc.

A partir de cette image exempte de "bruit" de quantification d'intensité, le circuit 13 calcule le gradient des intensités de gris dans deux directions, ici perpendiculaires. Comme le montre la matrice de pondération 23, qui présente une anti-symétrie par rapport à son axe vertical, trois pixels consécutifs d'une même ligne fournissent un résultat partiel de pondération de leurs intensités lissées qui est positif si le pixel de droite présente une intensité lissée supérieure à celle du pixel de gauche, résultat partiel qui, sinon, est négatif dans le cas contraire. Les trois résultats partiels des trois lignes fournissent par cumul un nombre avec signe représentant le gradient d'intensité Gh dans la direction horizontale. Comme on le remarque, la deuxième ligne, comportant le pixel central considéré, présente une pondération supérieure à celle des deux autres. La détermination du gradient Gv dans la direction verticale s'effectue selon le même principe, au moyen de la matrice 24, qui correspond à la matrice 23 tournée d'un quart de tour. Les matrices 22 et 23 présentent ainsi une allure de gaussienne à deux dimensions.

Une composition quadratique des deux gradients Gh et Gv fournit le gradient maximal G, dont la direction peut au besoin être définie comme étant la ligne de plus grande pente dans un plan tangent au "relief" des intensités lissées, plan défini par deux vecteurs représentés par Gh et Gv.

L'image des intensités ayant ainsi été remplacée par une image des gradients de celles-ci, la comparaison de cette dernière à un seuil de gradient dans le circuit 14 permet de repérer, pour des pixels proches, les transitions d'intensité représentatives d'un gradient dépassant le seuil et de dresser une carte des contours. On notera que les contours pourraient être déterminés autrement, par exemple par utilisation du Laplacien.

Les transitions d'intensité supérieure au seuil représentent des limites entre détails de l'image d'origine ayant des niveaux de gris nettement différents, tandis que les transitions de gris de faible amplitude à l'intérieur d'un même détail ne sont pas détectées.

Dans cet exemple, il est prévu deux seuils possibles de gradient, en fonction du type d'image, choisies par commande manuelle ou par reconnaissance optique. En cas de présence de caractères dans l'image, qui vont présenter des transitions abruptes, le seuil est réglé à un seuil S1 relativement haut, tandis que, dans le cas contraire, où il s'agit d'une image du genre photo; le seuil prend une valeur S2 plus faible.

Ayant ainsi isolé les contours, on effectue ensuite, dans les circuits 15-16, le traitement de l'image évoqué plus haut pour la seconde phase.

Pour cela, avant de procéder à l'interpolation entre pixels voisins, on substitue, aux intensités des pixels d'origine, des valeurs pondérées en fonction des intensités des pixels d'origine proches des pixels d'intensité à pondérer. On effectue à cet effet dans le circuit 15, sur les intensités des pixels d'origine, un lissage entre pixels proches, au moyen d'une matrice de lissage 25.

Là encore, la pondération des intensités des pixels de l'image d'origine entourant le pixel central est en fonction inverse de leurs distances à ce pixel central, d'intensité à pondérer. On comprendra que toutes les valeurs indiquées pour les matrices ne sont qu'un exemple particulier. Le lissage porte successivement sur tous les pixels de l'image numérisée d'origine mais présente surtout un intérêt dans les zones d'image comportant des transitions importantes, c'est-à-dire le long des contours. Dans cet exemple particulier d'une transmission de signaux binaires, de noir ou blanc, dans lequel le comparateur 4 est susceptible de commuter très souvent lorsque l'image optique présente un gris voisin du seuil, et de créer de ce fait un bruit de quantification important dans des zones initialement homogènes, le lissage ci-dessus présente l'avantage de supprimer ce bruit et de rétablir l'homogénéité de zones bruitées, hors contours.

Lorsque la matrice 25 se trouve dans une zone de l'image numérisée d'origine comportant un contour, les coefficients de la matrice 25 séparés du pixel central considéré sont réduits et même, dans cet exemple, passent à 0.

De ce fait, seules sont prises en compte les intensités des pixels du même côté du contour que le pixel central, si bien que l'on conserve globalement la valeur moyenne de nuance de gris de ces pixels, en ne considérant que les pixels d'origine d'intensités voisines, au moyen du maintien d'une ségrégation entre informations d'intensités relatives à des détails ayant des niveaux d'intensité très différents. On obtient alors une estimée $\tilde{N}i, j$, en niveaux de gris, de l'image numérisée d'origine avant quantification noir/blanc par le comparateur 4.

Ayant ainsi une trame des intensités de gris de l'image d'origine, trame quantifiée dans l'espace selon les pas horizontaux et verticaux de la résolution du télécopieur émetteur, on utilise ensuite une loi d'interpolation, ici linéaire, pour définir une valeur d'intensité pour toute position intermédiaire que l'on souhaite. On définit ainsi par interpolation une image continue représentant l'image optique d'origine et d'où les quantifications de niveau de gris et de position de pixels introduites par le télécopieur émetteur ont été quasiment supprimées. Le télécopieur récepteur dispose donc de l'équivalent électronique de l'image optique et peut alors l'échantillonner selon la résolution voulue, ici 24 points/mm. Dans certaines applications, il peut même être intéressant de faire tourner l'image. Bien évidemment, l'invention est applicable dans le cas d'une diminution de résolution, pour commander un appareil de restitution d'image non adapté à la chaîne 1.

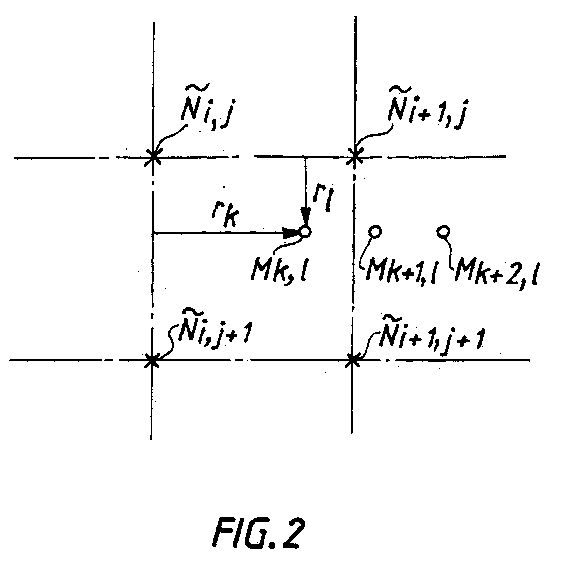

La figure 2 illustre le principe de l'interpolation.

Quatre pixels d'un bloc rectangulaire ou maille de l'image d'origine présentent des intensités lissées respectives $\tilde{N}i, j$, $\tilde{N}i+1, j$, $\tilde{N}i, j+1$ et $\tilde{N}i+1, j+1$. La position de chaque pixel est repérée par le centre théorique du pixel dans la matrice de pixels d'origine. Par commodité, on repère les pixels par leur intensité lissée.

Pour échantillonner selon une autre résolution, c'est-à-dire créer des pixels supplémentaires selon une nouvelle grille de résolution, on place une matrice de points, tels que Mk, I, Mk+1, I et Mk+2, I sur la matrice comportant les pixels Ni, de l'image d'origine.

Le pixel Mk, I étant encadré par les quatre autres pixels comme $\tilde{N}i, j$, on applique à l'intensité de chacun de ceux-ci une pondération variant linéairement de 0 à 1 selon que le pixel Mk, I est éloigné ou proche du pixel comme $\tilde{N}i, j$ considéré, ceci horizontalement ou verticalement (rk, rl).

On définit alors l'intensité lissée interpolée :

$$Mk, I = [[rk \times \tilde{N}i + 1,j + (1 - rk)\tilde{N}i,j] \times (1 - rl)$$

$$+ [rk \times \tilde{N}i + 1, j + 1 + (1 - rk) \tilde{N}i, j + 1] \times rl] / 2$$

De façon classique, le comparateur 17 fournit alors un signal quantifié Qk, I de commande de l'imprimante.

Un filtrage spatial englobant une zone plus étendue que la maille ci-dessus et prenant en compte des suites de points alignés passant par le point Mk, I concerné peut aussi être envisagé.

On remarquera que les deux étapes, de lissage puis d'interpolation, peuvent être fondues en une seule étape d'interpolation qui prendrait en compte un plus grand nombre de pixels d'origine, non lissés, c'est-à-dire que les coefficients de la matrice 25 seraient légèrement modulés en fonction du décalage de position du nouveau pixel Mk, I par rapport au centre de cette matrice 25.

**Revendications**

1. Procédé de modification de la résolution d'une image obtenue par numérisation d'une image réelle, l'image numérisée étant constituée d'une pluralité de pixels d'intensité déterminée, dans lequel on recherche et isole des contours dans l'image numérisée, **caractérisé par le fait qu'**on crée des pixels supplémentaires par interpolation des intensités de pixels d'origine, tenant compte seulement des pixels situés d'un même côté d'un contour pour former une image de résolution modifiée.

2. Procédé selon la revendication 1, dans lequel, avant de procéder à l'interpolation, on substitue, aux intensités des pixels d'origine, des valeurs pondérées en fonction des intensités des pixels d'origine proches des pixels d'intensité à pondérer.

3. Procédé selon l'une des revendications 1 et 2, dans lequel on recherche les contours en repérant, pour des pixels proches, les transitions d'intensité représentatives d'un gradient dépassant un seuil déterminé.

4. Procédé selon la revendication 3, dans lequel on recherche le gradient à l'aide d'une matrice de pondération (23 ; 24) qu'on applique aux intensités des pixels d'une matrice de pixels.

5. Procédé selon l'une des revendications 2 à 4, dans lequel on pondère les intensités des pixels d'origine en fonction inverse de leurs distances aux pixels d'intensité à pondérer.

6. Procédé selon l'une des revendications 1 à 5, dans lequel, pour créer les pixels supplémentaires, on ne considère que des pixels d'origine d'intensités voisines.

**Patentansprüche**

1. Verfahren zur Änderung der Auflösung eines durch Digitalisierung eines reellen Bildes erhaltenen Bildes, wobei das digitalisierte Bild aus einer Mehrzahl von Pixeln einer bestimmten Intensität besteht, wobei man in dem digitalisierten Bild Konturen sucht und isoliert, **dadurch gekennzeichnet, daß** man durch Interpolation der Intensitäten der ursprünglichen Pixel zusätzliche Pixel erzeugt, wobei nur auf der gleichen Seite der Konturen liegende Pixel berücksichtigt werden, um ein Bild mit geänderter Auflösung zu erzeugen.

2. Verfahren nach Anspruch 1, wobei man, vor der Durchführung der Interpolation, die Intensitäten der ursprünglichen Pixel durch gewichtete Werte ersetzt, die eine Funktion der Intensitäten derjenigen ursprünglichen Pixel sind, die in der Nähe derjenigen Pixel liegen, deren Intensität gewichtet werden soll.

3. Verfahren nach einem der Ansprüche 1 oder 2, wobei man die Konturen dadurch sucht, daß für nahe gelegene Pixel die Intensitätsübergänge lokalisiert werden, die für einen einen bestimmten Schwellwert überschreitenden Gradienten charakteristisch sind.

4. Verfahren nach Anspruch 3, wobei man den Gradienten mit Hilfe einer Wichtungsmatrix (23; 24) sucht, die man auf die Intensitäten der Pixel einer Pixelmatrix anwendet.

5. Verfahren nach einem der Ansprüche 2 bis 4, wobei man die Intensitäten der ursprünglichen Pixel als inverse Funktion ihrer Entfernungen von denjenigen Pixeln wichtet, deren Intensität gewichtet werden soll.

6. Verfahren nach einem der Ansprüche 1 bis 5, wobei man zum Erzeugen der zusätzlichen Pixel nur ursprüngliche Pixel benachbarter Intensitäten berücksichtigt.

**Claims**

1. A method of modifying the resolution of an image achieved by digitizing a real image, the digitized image being made up of a number of pixels of a predetermined intensity, in which contours in the digitized image are searched and isolated, **characterised by** the fact that extra pixels are created by interpolation of the intensities of the original pixels, taking into consideration only pixels located on the same side of a contour to form an image of modified resolution.

2. A method according to Claim 1 wherein before proceeding with the interpolation, values, weighted in relation to the intensities of the original pixels close to the pixels of intensity to be weighted, are substituted for the intensities of the original pixels.

**3.** A method according to one of the Claims 1 and 2 wherein the contours are searched by cross-referencing, for close pixels, the transitions of intensity representative of a gradient going beyond a predetermined threshold.

**4.** A method according to Claim 3, wherein the gradient is searched by means of a weighting matrix (23 ; 24) which is applied to the intensities of the pixels of a pixel matrix.

**5.** A method according to one of the Claims 2 to 4 wherein the intensities of the original pixels will be weighted in inverse relation to their distances to the pixels of an intensity to be weighted.

**6.** A method according to one of the Claims 1 to 5 wherein, in order to create the extra pixels, only original pixels of intensities in the same vicinity are considered.

FIG.1

FIG. 2